# EUROPÄISCHE PATENTSCHRIFT

(11) **EP 2 102 036 B1**
(45) Veröffentlichungstag und Bekanntmachung des Hinweises auf die Patenterteilung: **23.06.2010**
(21) Anmeldenummer: 08701289.4
(22) Anmeldetag: 08.01.2008
(51) Int. Cl.: B60R 22/40

(54) **SENSOREINRICHTUNG ZUR AKTIVIERUNG EINES SPERRMECHANISMUS FÜR EINEN GURTAUFROLLER EINES KRAFTFAHRZEUGS**
SENSOR UNIT FOR ACTIVATING A BLOCKING MECHANISM FOR THE SEAT-BELT RETRACTOR OF A MOTOR VEHICLE
DISPOSITIF DE DÉTECTION POUR ACTIVER UN MÉCANISME DE BLOCAGE D'UN ENROULEUR DE CEINTURE DE SÉCURITÉ DANS UN VÉHICULE À MOTEUR

(30) Priorität: 18.01.2007 DE 202007000909 U
(43) Veröffentlichungstag der Anmeldung: 23.09.2009
(73) Patentinhaber: Takata-Petri AG, 63743 Aschaffenburg (DE)
(72) Erfinder: WAHL, Norbert, 73235 Weilheim (DE)
(74) Vertreter: Baumgärtel, Gunnar
(86) Internationale Anmeldenummer: PCT/EP2008/050114
(87) Internationale Veröffentlichungsnummer: WO 2008/087066

(56) Entgegenhaltungen:
- WO-A-2004/005085
- DE-A1- 10 313 326
- DE-U1- 20 312 288
- US-A1- 2003 234 310

## Beschreibung

Die Erfindung betrifft eine Sensoreinrichtung zur Aktivierung eines Sperrmechanismus für einen Gurtaufroller eines Kraftfahrzeugs nach dem Oberbegriff des Anspruchs 1.

Eine derartige Sensoreinrichtung umfasst ein Sensorelement einer bestimmten Masse; eine Aufnahme, in der das Sensorelement beweglich gelagert ist; sowie einen Koppelmechanismus, über den das Sensorelement mit einem dem Gurtaufroller zugeordneten Sperrmechanismus gekoppelt ist, so dass der Sperrmechanismus bei einer Bewegung des Sensorelementes in der Aufnahme über den Koppelmechanismus aktivierbar ist und hierdurch eine Bewegung des Gurtaufrollers sperrt. Eine derartige Sensoreinrichtung ist beispielsweise aus der DE 103 13 326 A1 bekannt.

Bei einer derartigen Sensoreinrichtung wird das Sensorelement aufgrund seiner Masse im normalen Betriebszustand des Kraftfahrzeugs durch die am Sensorelement angreifende Schwerkraft in einer definierten Lage innerhalb der zugeordneten Aufnahme der Sensoreinrichtung gehalten. Wirken jedoch an dem Sensorelement Beschleunigungskräfte quer zur Schwerkraft, die etwa durch eine Fahrzeugverzögerung, z.B. als Folge einer starken Bremsung des Kraftfahrzeugs bzw. eines Crash-Falles, hervorgerufen werden, so bewegt sich das Sensorelement in der Aufnahme aus seiner Ruhelage heraus und wirkt derart auf den dem Sensorelement nachgeordneten Koppelmechanismus ein, dass dieser den dem Gurtaufroller zugeordneten Sperrmechanismus aktiviert. Hierdurch wird der Gurtaufroller für eine weitere (Dreh-) Bewegung gesperrt, so dass ein dem Gurtaufroller zugeordneter Sicherheitsgurt des Kraftfahrzeugs an einem weiteren Gurtauszug gehindert wird und somit einen den Sicherheitsgurt nutzenden Fahrzeuginsassen zuverlässig an einem Fahrzeugsitz halten kann.

Das Sensorelement einer derartigen Sensoreinrichtung ist typischerweise als eine metallische Kugel ausgebildet und die zugehörige Aufnahme besteht regelmäßig aus Kunststoff mit (Kalotten-)Flächen zur Lagerung der Kugel. Es sind jedoch auch andere Aufbauten möglich, solange gewährleistet ist, dass das Sensorelement (welches im normalen Betriebszustand eines Kraftfahrzeugs zweckmäßig durch die Schwerkraft in einer Ruhelage gehalten wird) bei Fahrzeugverzögerungen, die eine bestimmte Schwelle überschreiten, derart bewegt bzw. ausgelenkt wird, dass über den dem Sensorelement nachgeordneten Koppelmechanismus der Sperrmechanismus des Gurtaufrollers aktiviert und hierdurch der Gurtaufroller verriegelt wird.

Die Lagerflächen der Aufnahme sind dabei, z. B. durch geeignete Materialauswahl und/oder durch Polieren, so ausgebildet, dass sie eine leichtgängige Bewegung des Sensorelementes, also insbesondere einer Sensorkugel, unter der Wirkung quer zur Gewichtskraft gerichteter Kräfte ermöglicht.

Solche Sensoreinrichtungen (auch fahrzeugsensitive Sensoreinrichtungen genannt) sind vor Verschmutzungen, insbesondere durch (zäh-) flüssige Substanzen, zu schützen, die zu einer Adhäsion des Sensorelementes an der zugeordneten inneren Oberfläche der Aufnahme führen könnten. Denn hierdurch würde die Aktivierung des Sperrmechanismus verzögert, so dass ein größerer Gurtauszug vorläge, bis der Gurtaufroller verriegelt werden kann.

Der Erfindung liegt daher das Problem zugrunde, eine Sensoreinrichtung der eingangs genannten Art zu schaffen, die eine reduzierte Empfindlichkeit gegenüber Verschmutzungen aufweist.

Dieses Problem wird erfindungsgemäß durch die Schaffung einer Sensoreinrichtung mit den Merkmalen des Anspruchs 1 gelöst.

Danach weist das Sensorelement an seiner Oberfläche, über die es in der zugeordneten Aufnahme gelagert ist, eine Mindestrautiefe von 0.1 µm, insbesondere von mehr als 0.1 µm auf.

Vorteilhaft sind weiter Mindestrautiefen von 0.2 µm und insbesondere 0.4 µm.

Unter der Mindestrautiefe der Oberfläche des Sensorelementes wird hier der Mindestwert der über die Oberfläche (oder zumindest eines repräsentativen Teils der Oberfläche) gemittelten Rautiefe (also der so genannten mittleren Rautiefe) verstanden. Eine Angabe, wonach die Mindestrautiefe den Wert x annimmt, bedeutet sonach, dass die über die Oberfläche des Sensorelementes gemittelten Rautiefe ("mittlere Rautiefe") zumindest den Wert x aufweist.

Durch eine solche erhöhte Rautiefe des Sensorelementes, insbesondere in Form einer (metallischen) Sensorkugel, wird das Risiko einer Adhäsion des Sensorelementes an den zugeordneten Oberflächen der Aufnahme beim Eindringen von Fremdsubstanzen in die Sensoreinrichtung bzw. in die Aufnahme der Sensoreinrichtung reduziert, so dass die Sensoreinrichtung insgesamt robuster gegenüber möglichen Beeinträchtigungen ihrer Funktion durch Fremdsubstanzen ist.

Die Aufnahme, in der das Sensorelement angeordnet bzw. gelagert wird, ist z.B. als ein zur beweglichen Aufnahme des Sensorelementes eingerichtetes Gehäuse ausgebildet und weist eine Öffnung bzw. offene Deckfläche auf, durch die hindurch der am Sensorelement angreifende Koppelmechanismus zum zugeordneten Sperrmechanismus geführt wird.

Die Aufnahme bzw. das Gehäuse ist mit einem Lagerabschnitt versehen, der eine Lagerfläche zur beweglichen Lagerung des Sensorelementes definiert, gebildet durch eine dem Sensorelement zugewandte innere Oberfläche des Lagerabschnittes, und zwar insbesondere derart, dass sich die Lagerfläche (im Querschnitt betrachtet) entlang der Richtung der auf das Sensorelement wirkenden Schwerkraft verjüngt. Unter der Wirkung der Schwerkraft liegt das Sensorelement dann im normalen Betriebszustand des Kraftfahrzeugs linienartig oder flächig an der Lagerfläche an und wird unter der Wirkung einer Querkraft, die bei einer starken Geschwindigkeitsänderung des Kraftfahrzeugs auftritt, entlang der Lagerfläche angehoben und wirkt hierbei so auf den Koppelmechanismus ein, dass dieser den Sperrmechanismus aktiviert.

Der Koppelmechanismus kann beispielsweise ein an dem Sensorelement angreifendes Steuerelement, insbesondere in Form eines Steuerhebels, umfassen, dem eine - einstückig am Steuerhebel ausgebildete oder mit diesem (gelenkig) verbundene - Sperrklinke nachgeordnet ist, die in den Sperrmechanismus eingreifen kann, um diesen zu aktivieren und den Gurtaufroller zu verriegeln.

Der Sperrmechanismus kann ein Sperrrad mit Rastausnehmungen umfassen, gebildet beispielsweise durch eine am Sperrrad umlaufende Verzahnung, in die die Sperrklinke des Koppelmechanismus eingreifen kann, wenn die Sperrklinke als eine Folge einer Auslenkung des Sensorelementes betätigt wird. Durch den Eingriff der Sperrklinke in das Sperrrad, genauer in eine Rastausnehmung des Sperrrades, wird dieses verriegelt, nämlich an einer weiteren Drehbewegung um seine Drehachse gehindert. Indem das Sperrrad mit dem Gurtaufroller verbunden und beispielsweise um eine gemeinsame Drehachse gelagert ist, wird hierdurch gleichzeitig auch der Gurtaufroller verriegelt, so dass kein weiterer Gurtauszug erfolgen kann.

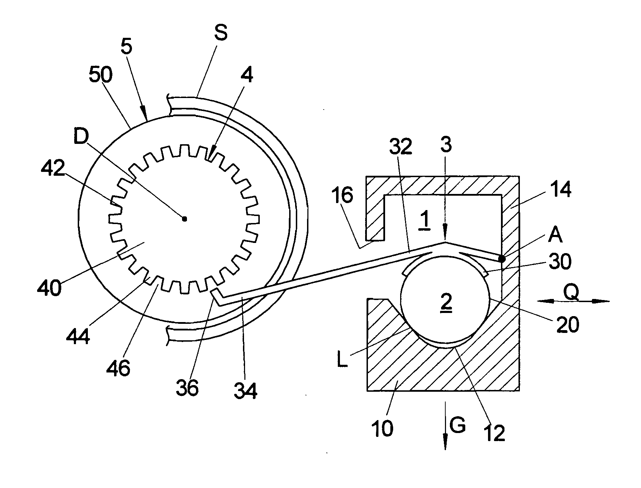

Weitere Einzelheiten und Vorteile der Erfindung werden bei der nachfolgenden Beschreibung eines Ausführungsbeispieles anhand der Figur deutlich werden.

Die Figur zeigt einen schematischen Querschnitt durch eine Sensoreinrichtung mit einer gehäuseartigen Aufnahme 1 und einem darin angeordneten Sensorelement 2 in Form einer (metallischen) Kugel sowie einen dem Sensorelement 2 nachgeordneten Koppelmechanismus 3 zur Kopplung der Sensoreinrichtung mit einem Sperrmechanismus 4, durch den ein Gurtaufroller 5 eines Kraftfahrzeugs verriegelbar ist.

Die gehäuseartige Aufnahme 1 weist zur Lagerung des Sensorelementes 2 in Form einer Kugel einen Lagerabschnitt 10 mit mindestens einer sich in Richtung der auf das Sensorelement 2 wirkenden Gewichtskraft G verjüngenden Lagerfläche 12 auf, auf der das Sensorelement 2 unter der Wirkung der Gewichtskraft G derart aufliegt, dass es sich mit seiner Oberfläche 20 im Wesentlichen linienartig, entlang einer umlaufenden Linie L, an der Lagerfläche 12 abstützt. Selbstverständlich kann sich das Sensorelement 2 aber auch großflächig an der Lagerfläche 12 des Lagerabschnittes 10 abstützen, insbesondere indem die Lagerfläche 12 eine der Sensorelementoberfläche 20 entsprechende Krümmung aufweist.

Die gehäuseartige Aufnahme 1 weist weiterhin einen Wandbereich 14 auf, der das Sensorelement 2 auf der dem Lagerabschnitt 10 gegenüberliegenden Seite umschließt und der mit einer Öffnung 16 versehen ist, durch die hindurch der Koppelmechanismus 3 von dem Sensorelement 2 zu dem Sperrmechanismus 4 geführt ist.

Der Koppelmechanismus 3, über den das Sensorelement 2 mit dem den Gurtaufroller 5 zugeordneten Sperrmechanismus 4 in Wirkverbindung steht, weist eingangsseitig (sensorelementseitig) ein kappenartiges Element 30 auf, das die Oberfläche 20 des Sensorelementes 2 in einem der Lagerfläche 12 abgewandten Oberflächenbereich über- und umgreift und das über einen um eine Achse A verschwenkbar an der gehäuseartigen Aufnahme 1 gelagerten Steuerhebel 32 mit einer ausgangsseitigen Sperrklinke 34 des Koppelmechanismus 3 verbunden ist. Die Sperrklinke 34 bildet vorliegend einen einstückigen Bestandteil des Steuerhebels 32 und ist mit einem Sperrzahn 36 versehen, der zur Aktivierung (Verriegelung) des Sperrmechanismus 4 in diesen eingreifen kann.

Der Sperrmechanismus 4 wird vorliegend gebildet durch ein Sperrrad 40, das an seinem äußeren Umfang 42 eine Sperrverzahnung 44, 46 aufweist, die durch entlang der Umfangsrichtung des Sperrrades 4 hintereinander angeordnete Zähne 44 und dazwischen liegende Lücken 46 gebildet wird Die Lücken 46 dienen als Rastausnehmungen, in die der sperrklinkenseitige Sperrzahn 36 zur Verriegelung des den Sperrmechanismus 4 bildenden Sperrrades 40 eingreifen kann.

Das Sperrrad 40 ist gemeinsam mit dem Gurtaufroller 5 (von dem in der Figur lediglich eine Gurtspule 50 dargestellt ist) um eine Drehachse D drehbar gelagert und derart mit dem Gurtaufroller 5 verbunden, dass bei einer Verriegelung des Sperrrades 40 durch Eingriff des sperrklinkenseitigen Sperrzahnes 36 in eine Rastausnehmung 46 des Sperrrades 40 zugleich auch der Gurtaufroller 5 verriegelt wird; d. h., im aktivierten Zustand des Sperrmechanismus 4 - also wenn die Sperrklinke 34 über ihren Sperrzahn 36 in eine Rastausnehmung 46 des Sperrrades 40 eingreift - sind sowohl das Sperrrad 40 als auch der Gurtaufroller 5 derart arretiert, dass sie sich nicht um die gemeinsame Drehachse D drehen können. Dass bedeutet insbesondere, dass ein weiterer Gurtauszug eines dem Gurtaufroller 5 zugeordneten Sicherheitsgurtes G verhindert wird.

Eine derartige Sensoreinrichtung funktioniert so, dass bei einer eine ruckartige Geschwindigkeitsänderung des Kraftfahrzeugs verursachenden Beschleunigung, beispielsweise als Folge einer starken Bremsung oder eines Unfalles, an dem durch eine Kugel gebildeten Sensorelement 2 Querkräfte Q senkrecht zur Gewichtskraft G wirken, wodurch das Sensorelement 2 entlang der zugeordneten Lagerfläche 12 mit einer Komponente entlang der Richtung der Querkräfte Q bewegt wird und wobei das Sensorelement 2 gleichzeitig entgegen der Gewichtskraft G angehoben wird. Hierdurch wirkt das Sensorelement 2 auf das kappenartige Element 30 des Koppelmechanismus 3 ein. Eine durch die Querkräfte Q hervorgerufene Auslenkung des Sensorelementes 2 bewirkt somit über das kappartige Element 30 ein Verschwenken des hiermit verbundenen Steuerhebels 32 des Koppelmechanismus 3 um seine gehäuseseitige Achse A, und zwar derart, dass der Sperrzahn 36 der am Steuerhebel 32 ausgebildeten Sperrklinke 34 in eine Rastausnehmung 46 der Sperrverzahnung 44, 46 des Sperrrades 40 eingreift. Hierdurch wird die gewünschte Verriegelung des mit dem Sperrrad 40 verbundenen Gurtaufrollers 5, genauer der Gurtspule 50 des Gurtaufrollers 5 erreicht.

Bei einer solchen Anordnung kann die Ansprechzeit des Sperrmechanismus 4, d.h., die Zeit, die zwischen der Einleitung der Querkräfte Q in die Sensoreinrichtung 1, 2, 3 und der Aktivierung des Sperrmechanismus 4, also der Verriegelung des Sperrrades 40, vergeht, verzögert werden, wenn in die das Sensorelement 2 lagernden gehäuseartigen Aufnahme 1 Fremdsubstanzen, insbesondere (zäh-)flüssige Substanzen, eingedrungen sind. Denn letzteres kann zu einer verstärkten Adhäsion der das Sensorelement 2 bildenden Kugel mit ihrer Kugeloberfläche 20 an der Lagerfläche 12 des gehäuseseitigen Lagerabschnittes 10 führen, so dass das Sensorelement 2 unter der Wirkung der Querkräfte Q nur mit Verzögerung aus der in der Figur gezeigten Ruhelage ausgelenkt wird.

Um eine solche Verlängerung der Ansprechzeit der Sensoreinrichtung 1, 2, 3 zu verhindern, weist das Sensorelement 2 vorliegend auf seiner Oberfläche 20 eine mittlere Rautiefe von wenigstens 0.1 µm, insbesondere von wenigstens 0.2 µm und besonders bevorzugt von ca. 0.4 µm auf. Hiermit lassen sich durch etwaige Fremdsubstanzen erzeugbare adhäsive Kräfte zwischen der Oberfläche 20 des Sensorelementes 2 und der (polierten) Lagerfläche 12 des gehäuseseitigen Lagerabschnittes 10 deutlich reduzieren, so dass die Ansprechzeit der Sensoreinrichtung 1, 2, 3 durch die genannten Fremdsubstanzen nicht wesentlich beeinträchtigt wird.

## Patentansprüche

1. Sensoreinrichtung zur Auslösung eines Sperrmechanismus für einen Gurtaufroller eines Insassenschutzsystems für Kraftfahrzeuge, mit
- einem Sensorelement (2),
- einer Aufnahme (1) zur beweglichen Lagerung des Sensorelementes (2), so dass dieses unter der Wirkung quer zur Gewichtskraft (G) gerichteter Kräfte (Q) auslenkbar ist, und
- einem Koppelmechanismus (3), über den das Sensorelement (2) derart mit einem Sperrmechanismus (4) eines Gurtaufrollers (5) gekoppelt ist, dass der Sperrmechanismus (4) bei einer Auslenkung des Sensorelementes (2) auslösbar ist,
**dadurch gekennzeichnet,**
**dass** das Sensorelement (2) zumindest in solchen Bereichen seiner Oberfläche (20), über die das Sensorelement (2) an einer Lagerfläche (12) der Aufnahme (1) anliegt, eine mittlere Rautiefe von wenigstens 0.1 µm aufweist.

2. Sensoreinrichtung nach Anspruch 1, **dadurch gekennzeichnet, dass** die mittlere Rautiefe des Sensorelementes (2) an seiner Oberfläche (20) mehr als 0.1 µm beträgt.

3. Sensoreinrichtung nach Anspruch 2, **dadurch gekennzeichnet, dass** die mittlere Rautiefe des Sensorelementes (2) an seiner Oberfläche (20) wenigstens 0.2 µm beträgt.

4. Sensoreinrichtung nach Anspruch 3, **dadurch gekennzeichnet, dass** die mittlere Rautiefe des Sensorelementes (2) an seiner Oberfläche (20) wenigstens 0.4 µm beträgt.

5. Sensoreinrichtung nach einem der vorhergehenden Ansprüche, **dadurch gekennzeichnet, dass** das Sensorelement (2) aus Metall besteht.

6. Sensoreinrichtung nach einem der vorhergehenden Ansprüche, **dadurch gekennzeichnet, dass** das Sensorelement (2) durch eine Kugel gebildet wird.

7. Sensoreinrichtung nach einem der vorhergehenden Ansprüche, **dadurch gekennzeichnet, dass** das Sensorelement (2) durch die an dem Sensorelement (2) wirkenden Gewichtskraft (G) in einer Ruhelage gehalten wird, aus der es durch die Querkräfte (Q) auslenkbar ist.

8. Sensoreinrichtung nach einem der vorhergehenden Ansprüche, **dadurch gekennzeichnet, dass** sich die Lagerfläche (12) für das Sensorelement (2) entlang der Richtung der auf das Sensorelement (2) wirkenden Gewichtskraft (G) verjüngt.

9. Sensoreinrichtung nach einem der vorhergehenden Ansprüche, **dadurch gekennzeichnet, dass** die Aufnahme (1) für das Sensorelement (2) als ein Gehäuse ausgebildet ist.

10. Sensoreinrichtung nach Anspruch 9, **dadurch gekennzeichnet, dass** das Gehäuse (1) eine Öffnung (16) aufweist, durch die hindurch der Koppelmechanismus (3) zum Sperrmechanismus (4) geführt ist.

11. Sensoreinrichtung nach einem der vorhergehenden Ansprüche, **dadurch gekennzeichnet, dass** der Koppelmechanismus (3) einen Steuerhebel (32) umfasst, der einerseits mit dem Sensorelement (2) in Verbindung steht, so dass er bei einer Auslenkung des Sensorelementes (2) bewegt wird, und der andererseits bei einer durch Auslenkung des Sensorelementes (2) hervorgerufenen Bewegung mit dem Sperrmechanismus (4) in Eingriff tritt, um diesen zu aktivieren.

12. Sensoreinrichtung nach Anspruch 11, **dadurch gekennzeichnet, dass** der Steuerhebel (32) um eine Achse (A) schwenkbar gelagert ist.

13. Sensoreinrichtung nach einem der vorhergehenden Ansprüche, **dadurch gekennzeichnet, dass** der Koppelmechanismus (3) eine Sperrklinke (34) umfasst, die zur Aktivierung des Sperrmechanismus (4) mit mindestens einer Rastausnehmung (46) des Sperrmechanismus (4) in Eingriff treten kann.

14. Sensoreinrichtung nach einem der vorhergehenden Ansprüche, **dadurch gekennzeichnet, dass** der Sperrmechanismus (4) ein Sperrrad (40) umfasst, das mit dem Gurtaufroller (5) verbunden ist, so dass der Gurtaufroller (5) durch Arretierung des Sperrrades (40) verriegelbar ist.

15. Sensoreinrichtung nach Anspruch 13 und 14, **dadurch gekennzeichnet, dass** die mindestens eine Rastausnehmung (46) am Sperrrad (40) vorgesehen ist.

## Claims

1. Sensor unit for activating a blocking mechanism for a belt retractor of an occupant protection system for motor vehicles with
- a sensor element (2),
- a receptacle (1) for displaceably mounting of the sensor element (2) so that it is deflected by the impact of forces (Q) acting transversally to weight (G), and
- a coupling mechanism (3) coupling the sensor element (2) with a blocking mechanism (4) of a belt retractor (5) in such a manner that the blocking mechanism (4) is triggered by a deflection of the sensor element (2),
**characterized in that**,
the sensor element (2) has a mean roughness depth of at least 0.1 µm at least in such areas of its surface (20) by which the sensor element (2) rests against a bearing surface (12) of the receptacle (1).

2. Sensor unit as claimed in claim 1, **characterized in that** the mean roughness depth of sensor element (2) at its surface (20) is more than 0.1 µm.

3. Sensor unit as claimed in claim 2, **characterized in that** the mean roughness depth of sensor element (2) at its surface (20) is at least 0.2 µm.

4. Sensor unit as claimed in claim 3, **characterized in that** the mean roughness depth of sensor element (2) at its surface (20) is at least 0.4µm.

5. Sensor unit as claimed in one of the preceding claims, **characterized in that** the sensor element (2) is made of metal.

6. Sensor unit as claimed in one of the preceding claims, **characterized in that** the sensor element (2) is formed by a ball.

7. Sensor unit as claimed in one of the preceding claims, **characterized in that** the sensor element (2) is kept in a rest position by a weight (G) affecting the sensor element (2) out of which it is deflected by lateral forces (Q).

8. Sensor unit as claimed in one of the preceding claims, **characterized in that** the bearing surface (12) for the sensor element (2) is tapered along the direction of the weight (G) affecting the sensor element (2).

9. Sensor unit as claimed in one of the preceding claims, **characterized in that** the receptacle (1) for the sensor element (2) is formed as a housing.

10. Sensor unit as claimed in claim 9, **characterized in that** the housing (1) has an opening (16) through which the coupling mechanism (3) is guided to the blocking mechanism (4).

11. Sensor unit as claimed in one of the preceding claims, **characterized in that** the coupling mechanism (3) comprises a steering lever (32) being on the one hand in contact with the sensor element (2) so that it is displaced by a deflection of the sensor element (2), and on the other hand engages with the blocking mechanism (4) due to a displacement caused by a deflection of the sensor element (2) in order to activate the blocking mechanism (4).

12. Sensor unit according to claim 11, **characterized in that** the steering lever (32) is mounted pivotably around an axis (A).

13. Sensor unit as claimed in one of the preceding claims, **characterized in that** the coupling mechanism (3) comprises a pawl (34) which can mesh with at least one engagement recess (46) of the blocking mechanism (4) for activating the blocking mechanism (4).

14. Sensor unit as claimed in one of the preceding claims, **characterized in that** the blocking mechanism (4) comprises a blocking wheel (40) connected to the belt retractor (5) so that the belt retractor (5) is blockable by locking the blocking wheel (40).

15. Sensor unit according to claims 13 and 14, **characterized in that** the at least one engagement recess (46) is provided on the blocking wheel (40).

## Revendications

1. Dispositif de détection pour déclencher un mécanisme de blocage pour un enrouleur de ceinture de sécurité d'un système de protection d'occupant pour des véhicules à moteur avec
- un élément de détection (2),
- un logement (1) pour le logement mobile de l'élément de détection (2) de sorte que celui-ci puisse être dévié sous l'effet de forces (Q) dirigées transversalement à la force pondérale (G), et
- un mécanisme d'accouplement (3), par le biais duquel l'élément de détection (2) est accouplé à un mécanisme de blocage (4) d'un enrouleur de ceinture de sécurité (5) de telle sorte que le mécanisme de blocage (4) puisse être détaché lors d'une déviation de l'élément de détection (2),
**caractérisé en ce**
**que** l'élément de détection (2) présente au moins dans de telles zones de sa surface (20), sur lesquelles repose l'élément de détection (2) sur une surface d'appui (12) du logement (1), une profondeur de rugosité moyenne d'au moins 0,1 µm.

2. Dispositif de détection selon la revendication 1, **caractérisé en ce que** la profondeur de rugosité moyenne de l'élément de détection (2) sur sa surface (20) s'élève à plus de 0,1 µm.

3. Dispositif de détection selon la revendication 2, **caractérisé en ce que** la profondeur de rugosité moyenne de l'élément de détection (2) sur sa surface (20) s'élève au moins à 0,2 µm.

4. Dispositif de détection selon la revendication 3, **caractérisé en ce que** la profondeur de rugosité moyenne de l'élément de détection (2) sur sa surface (20) s'élève au moins à 0,4 µm.

5. Dispositif de détection selon l'une quelconque des revendications précédentes, **caractérisé en ce que** l'élément de détection (2) est en métal.

6. Dispositif de détection selon l'une quelconque des revendications précédentes, **caractérisé en ce que** l'élément de détection (2) est formé par une sphère.

7. Dispositif de détection selon l'une quelconque des revendications précédentes, **caractérisé en ce que** l'élément de détection (2) est maintenu par la force pondérale (G) agissant sur l'élément de détection (2) dans une position de repos, de laquelle il peut être dévié par les forces transversales (Q).

8. Dispositif de détection selon l'une quelconque des revendications précédentes, **caractérisé en ce que** la surface d'appui (12) pour l'élément de détection (2) se rétrécit le long de la direction de la force pondérale (G) agissant sur l'élément de détection (2).

9. Dispositif de détection selon l'une quelconque des revendications précédentes, **caractérisé en ce que** le logement (1) pour l'élément de détection (2) est réalisé comme un boîtier.

10. Dispositif de détection selon la revendication 9, **caractérisé en ce que** le boîtier (1) présente une ouverture (16), par laquelle est guidé le mécanisme d'accouplement (3) vers le mécanisme de blocage.

11. Dispositif de détection selon l'une quelconque des revendications précédentes, **caractérisé en ce que** le mécanisme d'accouplement (3) comporte un levier de commande (32) qui est en liaison d'une part avec l'élément de détection (2) de sorte qu'il soit mobile lors d'une déviation de l'élément de détection (2) et qui vient en prise d'autre part lors d'un mouvement suscité par la déviation de l'élément de détection (2) avec le mécanisme de blocage (4) afin de l'activer.

12. Dispositif de détection selon la revendication 11, **caractérisé en ce que** le levier de commande (32) est logé de manière pivotante autour d'un axe (A).

13. Dispositif de détection selon l'une quelconque des revendications précédentes, **caractérisé en ce que** le mécanisme d'accouplement (3) comporte un cliquet d'arrêt (34) qui peut venir en prise pour l'activation du mécanisme de blocage (4) avec au moins un évidement d'encliquetage (46) du mécanisme de blocage (4).

14. Dispositif de détection selon l'une quelconque des revendications précédentes, **caractérisé en ce que** le mécanisme de blocage (4) comporte une roue de blocage (40) qui est reliée à l'enrouleur de ceinture de sécurité (5) de sorte que l'enrouleur de ceinture de sécurité (5) puisse être verrouillé par l'arrêt de la roue de blocage (40).

15. Dispositif de détection selon les revendications 13 et 14, **caractérisé en ce que** l'au moins un évidement d'encliquetage (46) est prévu sur la roue de blocage (40).
